# EUROPEAN PATENT SPECIFICATION

(11) **EP 1 703 788 B1**
(45) Date of publication and mention of the grant of the patent: **01.04.2009**
(21) Application number: 05704699.7
(22) Date of filing: 13.01.2005
(51) Int. Cl.: A01J 5/017, A01J 7/04, A01J 5/013, G01N 21/01, G01N 33/04, G01N 27/26

(54) **APPARATUS AND METHOD FOR CLEANING AND PRE-MILKING A TEAT OF A MILKING ANIMAL**
VORRICHTUNG UND VERFAHREN ZUM REINIGEN UND VORMELKEN EINER ZITZE VON MELKTIEREN
APPAREIL ET PROCEDE DE NETTOYAGE ET DE PRETRAITE DE LA MAMELLE D'UN ANIMAL EN LACTATION

(30) Priority: 13.01.2004 SE 0400046
(43) Date of publication of application: 27.09.2006
(73) Proprietor: DeLaval Holding AB, 147 21 Tumba (SE)
(72) Inventor: ERIKSSON, Jan, S-147 63 Uttran (SE); ANDERSSON, Gösta, S-151 52 Södertälje (SE)
(74) Representative: Keijser Bergöö, Malin Katarina
(86) International application number: PCT/SE2005/000025
(87) International publication number: WO 2005/067702

(56) References cited:
- WO-A-00/27183
- WO-A2-02/075284
- US-A1- 2002 054 831
- US-A1- 2003 106 496
- US-B1- 6 626 130

## Description

### TECHNICAL FIELD OF THE INVENTION

The present invention relates generally to dairy farming, and more specifically to apparatuses and methods for cleaning and pre-milking a teat of a milking animal prior to the milking animal being milked.

### DESCRIPTION OF RELATED ART AND BACKGROUND OF THE INVENTION

When a milking animal presents for milking it is important to ensure that the teat is free of any soiling or condition that could contaminate milk drawn from the teat by a milking apparatus. Various teat-cleaning techniques have been proposed and applied such as water or cleaning fluid sprays and brushes, see e.g. US 6,626,130, US 6,591,784, US 6,553,942, US 5, 211,132, US 5,235,937, and US 4,305,346.

It is also desirable and -even a legal requirement in some countries to pre-milk the teats. By pre-milking is here meant the first phases of milking in which the teat is stimulated in order to stimulate the milk ejection reflex and induce milk letdown; and the pre-milking is started and an amount of milk, also called cistern milk, is collected separately for inspection and/or is discarded in order to prevent contaminants on or inside the teat, from being transported into a milk storage tank.

US 6,321,682 B1 discloses a teat cleaning and pre-milking device comprising a teat receiving means having a teat deceiving opening, sealing means for sealing the opening against an udder, teat cleaning means for cleaning a teat inserted into the teat receiving means and means for extracting foremilk from the teat. The teat cleaning means comprises at least one nozzle for injecting fluid therein or cylindrical rotatable brushes; and the means for extracting foremilk comprises vacuum-supplying means for providing the teat receiving means with an underpressure.

US 6,155,204 discloses means for removing foremilk constituted by the cleaning means itself. The cleaning means are preferably active in a cleaning mode and subsequently in a foremilking mode. A sensor can be provided to detect whether or not foremilk has been removed. The application of such a sensor enables removal of foremilk during a fixed time from the moment which foremilk has been detected by the sensor. When the foremilking mode has started, but after a certain time, e.g. after from three to six seconds, still no foremilk has been detected, the pressure applied on the teats by the means for removing foremilk can be increased. Furthermore, means can be provided to check the foremilk collected, e.g., its color, electrical conductivity, filter resistance, etc., and, depending on the results of this check, to determine the time during which foremilk is removed.

### SUMMARY OF THE INVENTION

The teat cleaning and pre-milking device of US 6,321,682 B1 is incapable of detecting whether foremilk has actually been extracted from the teat of the milking animal. Further, the device comprises no means at all for checking the collected foremilk.

The device of US 6,155,204 uses in various embodiments two rotating elements for cleaning and pre-milking. To shift from the cleaning mode to the foremilking mode, at least one of the rotating elements is deformable or the rotating elements can be brought in a different position or in a different condition of movement in relation to each other. Both the cleaning and the pre-milking may be unsatisfactory using such kind of rotating elements.

Further, both the above devices lack any means whatsoever for analyzing the quality of the foremilk, for comparing the quality of the foremilk with a desired value, and for controlling the subsequent milking of the milking animal depending on the quality of the foremilk.

A general object of the present invention is thus to provide an apparatus and a method, respectively, for satisfactory cleaning and pre-milking of a teat of a milking animal prior to the milking animal being milked, by which it is possible to control the subsequent milking of the milking animal.

A particular object of the invention is to provide such an apparatus and such a method, which are automatic and capable of providing, prior to the milking animal being milked, an indication whether or not milk drawn from the teat of the milking animal during a subsequent milking should be mixed with milk drawn from another milking animal.

It is a further object of the invention to provide such an apparatus and such a method, which are capable of providing a separate indication of the above kind for each teat of the milking animal.

It is still a further object of the invention to provide such an apparatus and such a method, which are reliable, flexible, of fairly low cost, and relatively easy to implement also in existing milking systems.

It is yet a further object of the invention to provide a milking system, preferably an automated milking system provided with a milking robot, comprising an apparatus that accomplishes the above objects and means for directing milk from the teats of a milking animal individually to one of a plurality of locations.

These objects, among other, are according to the present invention attained by an apparatus and method as specified in the appended patent claims.

By establishing that milk is actually extracted from a teat of the milking animal during cleaning and pre-milking by a combined cleaning and pre-milking apparatus; measuring a quality, preferably a somatic cell count value, of the foremilk extracted from the teat of the milking animal during the cleaning and pre-milking procedures; comparing the measured quality of the foremilk with a reference quality value; and indicating, depending on the comparison, whether or not milk drawn from the teat of the milking animal during a subsequent regular milking should be mixed with milk drawn from another teat of the milking animal or from another milking animal, proper separation of milk on a teat-individual basis can be performed.

The technique is preferably implemented in a milking system such as an automated or semi-automated milking system comprising a device for milking the milking animal and means for directing milk from the teat of the milking animal individually to one of a plurality of locations depending on the measured quality of the foremilk extracted from the teat of the milking animal obtained during the cleaning and pre-milking procedures. The milking system may be arranged in any of parallel stall, Herringbone, or rotary configuration. The device for milking the milking animal may include a milking robot for attaching the teat cups of the milking system to the teats of the milking animal.

The milking system is provided with a number of regular teat cups corresponding to the number of teats of the milking animal, where the regular teat cups are capable of being attached to the teats of the milking animal and through which milk is capable of being drawn to a common location; at least one further teat cup capable of being attached to a teat of the milking animal and through which milk is subsequently capable of being drawn individually to a location different than the common location; and means for attaching to the teat of the milking animal, either one of the regular teat cups, or the further teat cup depending on the indication whether or not milk drawn from the teat of the milking animal should be mixed with milk drawn from another milking animal, and for subsequently drawing milk through the further teat cup.

Thus, if there is indicated that the milk from a particular teat of the milking animal should not be mixed with milk from the other teats, e.g. due to a high cell count value or similar, which indicates that the milking animal has mastitis or other infection in that teat or udder section, the regular teat cups are attached to the other teats of the milking animal and the further teat cup is attached to the particular teat, whereupon milk drawn through the regular teat cups is collected at one location, e.g. in a milk storage tank, whereas milk drawn through the further teat cup is collected at another location, e.g. in feed supply device for calves, or is discarded.

The use of a further teat cup is particularly advantageous in in automatic milking robot system. In a typical situation only a fraction of the milking animals in a herd have mastitis, and of these a vast majority has only one infected teat or udder section. Thus, after that an ill milking animal has been milked by the automatic milking robot system it is probable that a healthy milking animal will next be milked. During this milking all the regular teat cups can be used concurrently with that the further teat cup, which has been used for milking the infected teat or udder section, can be cleaned thoroughly and sterilized. This cleaning and sterilization, although being much more thorough than any regular cleaning of teat cups, can thus be performed without causing any additional delay in the milking procedures.

Devices for establishing that milk is actually extracted from a teat of the milking animal during cleaning and pre-milking, and for measuring the quality of the foremilk extracted from the teat of the milking animal during the cleaning and pre-milking procedures may each be a device for non-contacting measurement, e.g. an optical device.

In a preferred embodiment the teat cleaning and pre-milking apparatus comprises a light transparent chamber, through which milk as obtained during the cleaning and pre-milking procedures is flowed, and the device for establishing that milk is actually extracted is a device for determining the composition of a fluid in the light transparent chamber, which comprises a light source for illuminating the light transparent chamber, and a light detector for detecting light from the light source after having interacted with the fluid in the light transparent chamber.

In a further preferred embodiment of the present invention the teat cleaning and pre-milking apparatus comprises a light transparent measuring chamber, through which milk as obtained during the cleaning and pre-milking procedures is flowed, and the device for measuring the quality of the foremilk is a device for counting somatic cells or fat droplets, which comprises a light source system for illuminating milk that flows through the measuring chamber; a two-dimensional camera system including a lens system, preferably a microscope, for repeatedly recording two-dimensional digital images of illuminated milk that flows through the measuring chamber, where the two-dimensional digital images are recorded through the lens system; and a digital image processing system for determining a somatic cell or fat droplet count score from the two-dimensional images.

Alternatively, the devices for establishing that milk is actually extracted and for measuring the quality of the foremilk may each be a device for milk-contacting measurement, e.g. a conductivity meter or an ion-sensitive sensor based device, having a sensor or probe located inside the teat cleaning and pre-milking device.

The use of milk-contacting sensing means is particularly advantageous in a combined teat cleaning and pre-milking apparatus since the sensor or probe coming into contact with the milk measured can easily be cleaned by the cleaning means of the apparatus subsequent to having been in contact with milk during the pre-milking. Hereby, accurate and precise measurements are enabled.

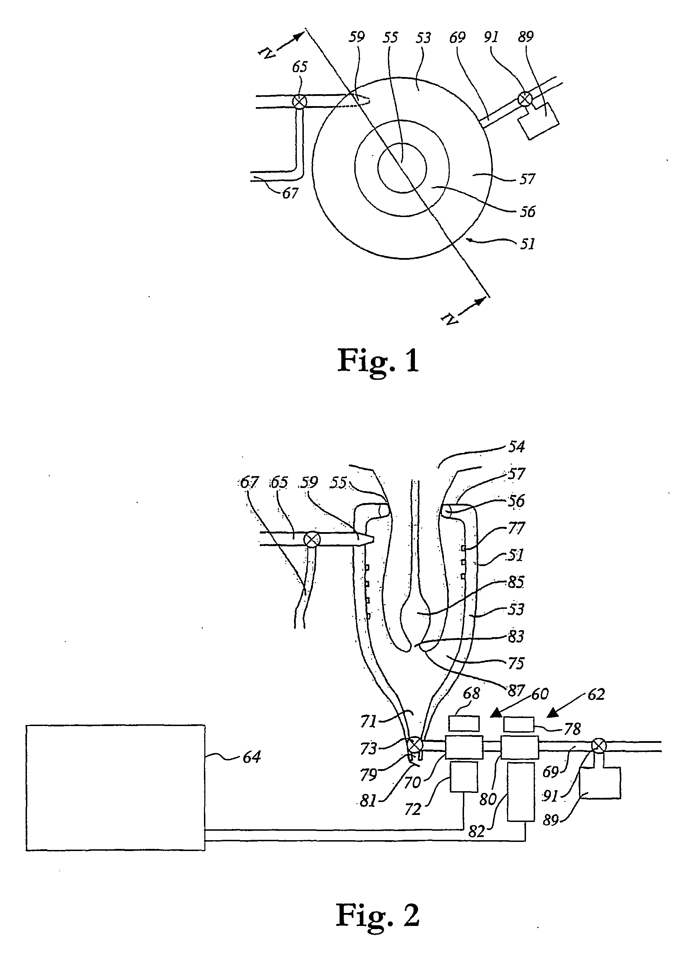

Further characteristics of the invention and advantages thereof, will be evident from the following detailed description of preferred embodiments of the present invention given hereinafter and the accompanying Figs. 1-5, which are given by way of illustration only and thus, are not limitative of the present invention.

In the following detailed description the milk producing animals are cows. However, the invention is not limited to cows, but is applicable to any animals having the capability to produce milk.

### BRIEF DESCRIPTION OF THE DRAWINGS

Figs. 1 and 2 illustrate schematically, in top and cross-sectional views, respectively, a cleaning and pre-milking apparatus according to a preferred embodiment of the present invention.
Fig. 3 illustrates schematically, in a cross-sectional top view, a device for counting somatic cells or fat droplets in milk as being comprised in the apparatus of Figs. 1 and 2.
Fig. 4 illustrates schematically, in a cross-sectional view, a cleaning and pre-milking apparatus according to a further preferred embodiment of the invention.
Fig. 5 illustrates schematically main components of a milking system according to a yet further preferred embodiment of the present invention.

### DETAILED DESCRIPTION OF EMBODIMENTS

Figs. 1 and 2 show a preferred embodiment of a combined teat cleaning and pre-milking apparatus in accordance with the present invention. The apparatus comprises a teat cleaning and pre-milking device 51 including a teat receiving means in the shape of an approximately cylindrical teat cup 53 with a teat receiving opening 55 in its upper surface 57.

The teat cup 53 is intended to be placed under the udder of a cow to be milked with the opening 55 below a teat 54, which is to be cleaned prior to milking. The teat cup 53 is then raised so that teat 54 enters through the opening 55. The opening 55 is surrounded by a resilient sealing collar 56, which is in substantially airtight sealing contact with the udder when the teat 54 is fully inserted into the teat cup 53.

The teat cup 53 is provided with an approximately tangential inlet nozzle 59 near the upper surface 57. A cleaning fluid supplying line 65 connected to a cleaning fluid supply (not shown) and a drying air supply line 67 connected to an air supply (not shown) can be selectively connected to the nozzle 59.

A vacuum supply line 69 connected to a vacuum supply (not shown) is connected to an outlet opening 71 in the bottom of the teat cup 53 via a valve 73 to be used for pre-milking of the teat of the cow subsequent to cleaning. A foremilk collection vessel 89 is connected to the vacuum supply line 69 via a valve 91.

The teat cleaning and pre-milking device 51 is further described in the above-identified US 6,321,682 B1, the content of which being hereby incorporated by reference.

Further, the combined teat cleaning and pre-milking apparatus comprises a pre-milking sensing device 60 for establishing that foremilk is actually extracted from the teat of the cow during the pre-milking, and a milk quality sensing device 62 for measuring a quality, preferably a somatic cell count value, of the foremilk extracted from the teat of the cow during the pre-milking. Both the sensing devices 60 and 62 are conveniently connected to a computer 64.

The pre-milking sensing device 60 is preferably an optical device for non-contacting measurement, and to this end a light transparent chamber 70 is provided in the vacuum supply line 69 upstream of the foremilk collection vessel 89. The device 60 aims at determining the composition of the fluid or mixture of fluids in the light transparent chamber 70 and comprises a light source 68 for illuminating the light transparent chamber 70, and a light detector 72 for detecting light from the light source 68 after having interacted with the fluid or fluid mixture in the light transparent chamber 70. An example of a pre-milking sensing device 60 for use herein is disclosed in the Swedish patent No. 515 187 C2. This device is capable of distinguishing fluids like air, water cleaning fluid and milk.

The milk quality-sensing device 62 is preferably also an optical device for non-contacting measurement, and accordingly a light transparent cell 80 is provided in the vacuum supply line 69 upstream of the foremilk collection vessel 89. The device aims at counting somatic cells or fat droplets and comprising a light source 78 for illuminating foremilk that flows through the measuring cell 80, and a two-dimensional camera system 82 for repeatedly recording two-dimensional digital images of illuminated milk that flows through the measuring cell 80, where the computer 64 includes a digital image processing module for determining a somatic cell or fat droplet count score from the two-dimensional images.

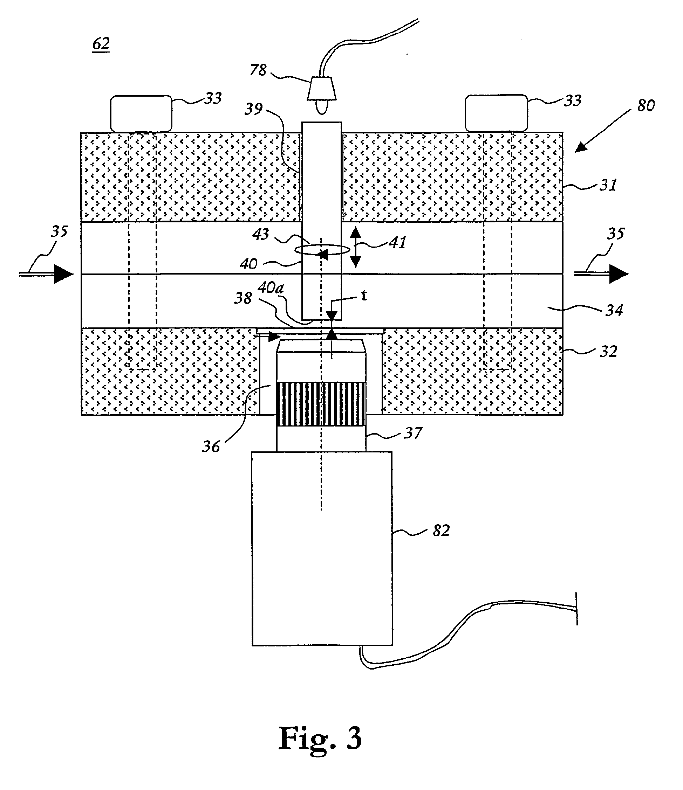

In Fig. 3 a preferred embodiment of the milk quality-sensing device 62 is illustrated. The light transparent chamber 80 comprises a top and a bottom cell block 31 and 32, which when being attached to each other in a fluid tight manner by means of four bolts 33 form a milk passageway 34 from left to right as indicated by arrows 35.

The bottom cell block 32 is provided with a substantially vertical through hole 36. A surface portion of the bottom cell block 32, which together with a corresponding surface of the top cell block 31, form the passageway 34, is shaped to be plane. A light transparent plate 38 fitted within the flat portion is glued to the bottom cell block 32 in a fluid tight manner. The size of the hole 36 is selected so that a magnification lens system 37, preferably a microscope, of the two-dimensional camera system 82 can be inserted therein.

The top cell block 31 is provided with a substantially vertical through hole 39 aligned with the hole 36. A rod 40 is fitted to be inserted to the through hole 39 so that a flat end surface 40a of the rod 40 is located in the passageway 34 opposite to and parallel with the plate 38. The rod 40 is tightly fitted in the through hole 39 to prevent milk from leaking out through the hole 39, and is preferably movable in a vertical direction as is indicated by arrow 41.

During somatic cell count measurements the distance t between the light transparent plate 38 and the flat end surface 40a of the rod 40 is preferably smaller than about 100 microns. It is important to obtain a depth of field and focusing of the camera system 82 so that the images will be sharp.

The rod 40 is preferably light transparent to allow for illumination of the milk that flows between the light transparent plate 38 and the flat end surface 40a of the rod 40 by the light source 78, through the rod 55. In order to assure that milk is not clogged between the light transparent plate 38 and the flat end surface 40a of the rod 40, the rod 40 may be rotated around its axis during measurements as being indicated by arrow 43.

The camera system 82 is preferably provided with a microscope or tele/macro photo lens system 37 to record strongly magnified two-dimensional images. Since the camera system 82 shall provide for a spatial resolution in the two-dimensional digital images better than 2 microns, very small areas are recorded and therefore a large number of images have to be recorded in order to provide accurate and precise somatic cell count scores.

The digital image processing of the images may include the analysis of number, size, shape, structure, morphological structure, density and/or composition of particles found in each image.

The milk quality-sensing device 62 as described with reference to Fig. 3 is further detailed in our pending Swedish patent application No. 0300431-4.

A single measuring device may be provided instead of the sensing devices 60 and 62, which is capable of both establishing that foremilk is extracted from the teat of the cow during the pre-milking, and measuring a quality of the foremilk extracted from the teat of the cow during the pre-milking.

The operation of the teat cleaning and pre-milking apparatus is shortly described below.

A teat is cleaned by spraying it with a high-speed cleaning fluid ejected from the nozzle 59. The impact of the fluid on the circular inner wall 75 of the teat cup 53 produces vortices, which clean the teat due to their turbulent motion. This turbulent motion, and consequential cleaning effect can be increased and adjusted, for example, by pulsating the fluid flow, injecting air into the fluid flow, applying a vacuum to the teat cup, and/or disturbing the flow by means of protuberances 77 on the inner wall 75 of the teat cup 53.

The cleaning fluid leaves the teat cup 53 via the outlet opening 71, a further outlet 79, and a non-return valve 81. Preferably the draining of the cleaning fluid from the teat cup 53 is assisted by vacuum being applied to the outlet 79.

After cleaning, the teat 54 is dried by air being blown into the teat cup 53 via the drying air supply line 67. After passing teat 54 the air can leave the teat cup 53 through the outlet 71.

Subsequent to drying, the teat 54 is pre-milked. This is achieved by producing an under pressure in the teat cup 53 by opening the vacuum supply valve 73. This under pressure is chosen to be sufficient to overcome the muscle pressure holding a milk canal 83 of the teat 54 closed, which milk canal 83 leads milk from the teat milk cavity 85 to the tip 87 of the teat 54. Thus, the milk canal 83 opens and foremilk contained in the milk cavity 85 is caused to flow to the tip 87. The foremilk is sucked though the opening 71 and into the vacuum supply line 69, and is collected in the vessel 89.

During pre-milking, the pre-milking sensing device 60 establishes that foremilk is extracted from the teat of the cow, and the milk quality sensing device 62 measures the somatic cell count value of the foremilk. The signals from the devices 60, 62 is directed to the computer 64, which holds a reference somatic cell count value and which is provided with a computer program product including software code portions for comparing the measured somatic cell count value of the foremilk from the teat of the cow with the reference somatic cell count value, and indicating, depending on the comparison, whether or not milk drawn from the teat of the cow during subsequent milking should be mixed with milk drawn from the other teats of the cow or with milk drawn from another cow, when the computer program product is run on the computer 64. Preferably, the reference somatic cell count value is a threshold value, and an indication that milk drawn from the teat of the cow during subsequent milking should not be mixed, is made if the measured somatic cell count value is higher than the threshold value.

By such provisions true separation of milk on a *teat-individual* basis can be performed.

After the foremilk has been collected, the inlet valve 91 is used to close the inlet to the vessel 89, and the teat cup 53 can be removed from the teat 54 of the cow.

The combined teat cleaning and pre-milking apparatus is preferably used for cleaning and pre-milking each of the teats of the cow in a sequential order, whereupon the pre-milking sensing device 60 establishes that foremilk is extracted from *each* of the teats of the cow, the milk quality sensing device 62 measures the quality of foremilk extracted from each of the teats of the cow, and the computer 64 compares the measured qualities of the milk from *each* of the teats of the cow with a respective quality reference value, and indicates, depending on the comparisons, whether or not milk drawn from each of the teats of cow during subsequent milking should be mixed with milk drawn from the respective other teats of the cow.

However, an alternative embodiment of the invention comprises for *each* of the teats of the cow a combined teat cleaning and pre-milking apparatus so that each of teats of the cow can be cleaned and pre-milked concurrently (not illustrated).

It shall be appreciated that surfaces of each combined teat cleaning and pre-milking apparatus that come into contact with the foremilk during pre-milking shall be cleaned before next teat is cleaned by that cleaning and pre-milking apparatus.

Further, the apparatus of Figs. 1 and 2 may comprise a device for measuring the amount of foremilk that is extracted from the teat of the cow during pre-milking, and optionally a device for finishing the pre-milking depending on the measured amount of milk that is extracted from the teat of the cow during pre-milking (not illustrated).

In an alternative embodiment the computer 64 may receive an indication of the identity of the cow, and optionally the identity of the teat of the cow, and adapt the cleaning and pre-milking of that cow or the teat of that cow individually depending on the indicated identity of the cow, and optionally the identity of the teat of the cow.

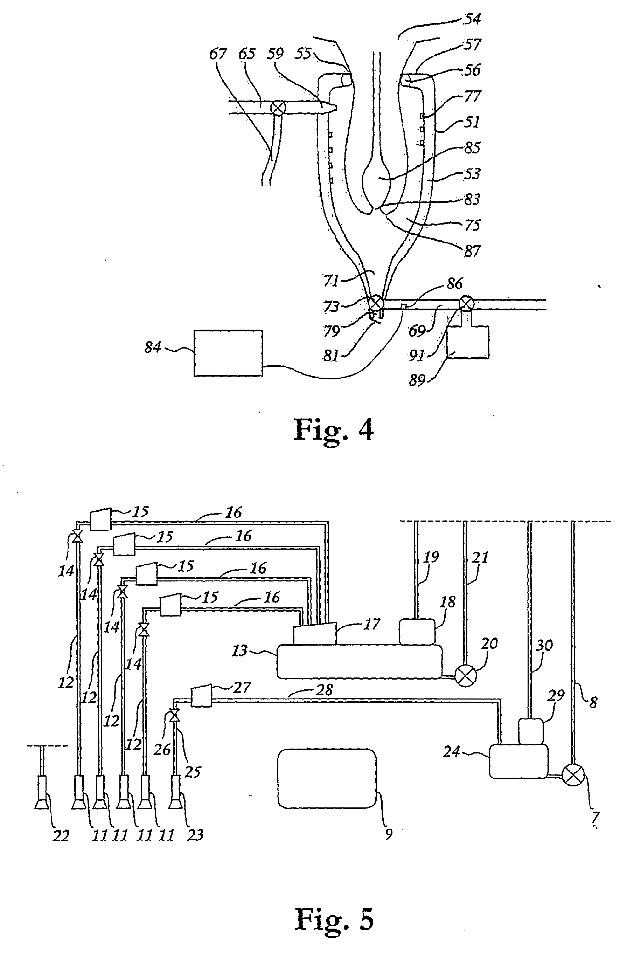

Fig. 4 illustrates a further preferred embodiment of the cleaning and pre-milking apparatus of the present invention. The apparatus is identical with the Figs. 1 and 2 embodiment except for the sensing devices 60 and 62, which here is comprised of a single milk-contacting measurement device 84, e.g. a conductivity meter or an ion-sensitive sensor based device, including a sensor or probe 86 located inside the vacuum supply line 69 of the teat cleaning and pre-milking apparatus. Further, in this embodiment, the teat cleaning and pre-milking apparatus is preferably adapted to automatically clean the sensor or probe 86 subsequent to having been contact with milk during pre-milking.

For instance, a conductivity meter may be used to sense that milk is actually extracted from a teat of the milking animal during cleaning and pre-milking since milk has distinguishable conductivity values as compared to air, water and the cleaning fluid. Further, the conductivity meter is capable of measuring a milk quality such as the somatic cell count value of the foremilk extracted from the teat of the milking animal during the cleaning and pre-milking procedures due to mastitis since ion concentration, and thus electrical conductivity, in mastitic milk is higher than in normal milk.

An ion-sensitive sensor based device is capable of distinguishing pre-milk from water or a cleaning fluid based on different concentrations of some ion in said pre-milk and in said water or cleaning fluid.

Fig. 5 illustrates some of the main components of an automated milking system for cows wherein the present invention is implemented. The automated milking system comprises four teat cups 11. Each teat cup 11 is connected to a respective milk tube 12, which in turn is connected to an end unit 13 via a respective valve or regulator 14, a respective flow meter 15, a respective milk conduit 16, optionally a respective conductivity meter or other measuring device such as an infrared spectrometer device (not shown), and a common milk meter 17. The end unit 15 is connected to a vacuum source (not illustrated) via a milk/air separator 18 and a vacuum supply conduit 19.

During regular milking of the teats of a healthy cow, the teat cups 11 are attached to the teats of a cow typically by a robot arm (not illustrated) and vacuum is supplied to the end unit 13 via the vacuum supply conduit 19 to draw milk from the teats of the cow, through the milk lines and into the end unit 13. The valves or regulators 14 may be used to control the individual vacuum levels in the teat cups 11. The milk from each udder quarter of the cow is measured individually by the flow meters 15, after which the weight of the milk from the cow is measured by the common milk meter 17. Further, a pump and regulator system 20 may be provided for pumping the milk to e.g. a larger milk storage tank (not illustrated) via a milk output line 21 connected to the end unit.

A computer-based processing and control device (not illustrated) is responsible for processing and controlling of the milking, and comprises typically a microcomputer, suitable software, and a database including information of each of the cows milked by the milking machine, such as e.g. when the respective cow was milked last time, when she was fed last time, her milk production, her health, etc.

The automated milking system comprises further a cleaning apparatus 9 for cleaning various parts of the milking system on a regular time basis or when needed; an inventive combined teat cleaning and pre-milking apparatus 22, which may be either the apparatus of Fig. 1 and 2 or the one of Fig. 4; and a further teat cup 23, which is connected to a separate end unit 24 via a milk tube 25, a valve or regulator 26, a flow meter 27, and a milk conduit 28. The separate end unit 24 is connected to a vacuum source (not illustrated) via a milk/air separator 29 and a vacuum supply conduit 30. Milk drawn through the teat cup 23 and into the separate end unit 24 can be pumped by a pump 7 (which may be the same pump as being used for pumping the milk from the end unit 13) through a separate milk output line, which may be used for discarding milk from the milking of an udder quarter of a cow, for pumping the milk to another separate tank, or for pumping the milk to a feed device for feeding calves.

When milking a teat of a cow in the milking system of Fig. 5, either one of the teat cups 11 or the teat cup 23 is attached to the teat depending on the indication whether or not milk drawn from the teat of the cow during subsequent milking should be mixed with milk drawn from the other teats of the cow or with milk drawn from another cow, as made by the computer 64. For instance, if there is indicated that the milk from a particular teat of the cow should not be mixed, e.g, due to a high cell count value or similar, which in turn suggests that the cow has mastitis or other infection in that teat or udder section, the teat cups 11 are attached to the other teats of the milking animal and the teat cup 23 is attached to the particular teat, whereupon milk drawn through the teat cups 11 is collected at one location, e.g. in a milk storage tank, whereas milk drawn through the teat cups 23 is collected at another location, e.g. in feed supply device for calves, or is discarded.

The use of the further teat cup 23 is particularly beneficial in an automatic milking robot system. In a typical herd of cows only a small proportion of the cows have mastitis, and of these a vast majority has a single infected teat or udder quarter. Thus, after that an ill cow has been milked by the automatic milking robot system it is probable that a healthy cow will next be milked. During this following milking of the healthy cow, all the regular teat cups 11 can be used concurrently with that the further teat cup 23, which has been used for milking the infected teat or udder quarter during the previous milking, can be cleaned thoroughly and sterilized by the cleaning apparatus. This cleaning and sterilization, although being much more through than any regular cleaning of teat cups, can be performed without causing any additional delay in the milking procedures.

## Claims

1. A milking system comprising an apparatus for cleaning and pre-milking a teat of a milking animal prior to the milking animal being milked and a device for milking the milking animal, whereby
- said apparatus for cleaning and pre-milking a teat includes
- a teat cleaning and pre-milking device (51) having cleaning means and pre-milking means, wherein, during cleaning and pre-milking procedures, said teat of the milking animal is exposed to said cleaning means and said pre-milking means;
- pre-milking sensing means (60; 84) for establishing that milk is actually extracted from said teat of the milking animal during the cleaning and pre-milking procedures;
- milk quality sensing means (62; 84) for measuring a quality, preferably a somatic cell count value, of said milk extracted from said teat of the milking animal during the cleaning and pre-milking procedures;
- comparing means (64) for comparing the measured quality of said milk with a reference quality value; and
- indicating means (64) for indicating, depending on said comparison, whether or not milk drawn from said teat of the milking animal during a subsequent milking should be mixed with milk drawn from another milking animal; and
- said device for milking the milking animal comprises
- a number of teat cups (11) corresponding to the number of teats of the milking animal, where the teat cups are capable of being attached to the teats of the milking animal and through which milk is capable of being drawn to a common location;
- at least one further teat cup (23) capable of being attached to a teat of the milking animal and through which milk is subsequently capable of being drawn individually to a location different than said common location; and
- means for attaching to said teat of the milking animal either one of the number of teat cups corresponding to the number of teats of the milking animal, or said further teat cup depending on the indication of said indicating means; and for subsequently drawing milk there through.

2. The milking system of claim 1 wherein
- said teat cleaning and pre-milking device (51) is provided with a teat receiving opening (55), and a teat receiving opening sealing means (56), and said pre-milking means is comprised of vacuum-supplying means (69) to create an under pressure in said teat cleaning and pre-milking device, wherein, during said cleaning and pre-milking procedures, said teat of the milking animal is received by the teat receiving opening and said sealing means is in substantially airtight sealing contact with the udder of the milking animal.

3. The milking system of claim 1 or 2 wherein
- said teat cleaning and pre-milking device is adapted to be used to expose each of the teats of the milking animal for said cleaning and pre-milking procedures in a sequential order;
- said pre-milking sensing means is adapted to establish that milk is actually extracted from each of the teats of the milking animal during said cleaning and pre-milking procedures;
- said milk quality sensing means is adapted to measure the quality of milk extracted from each of the teats of the milking animal during said cleaning and pre-milking procedures;
- said comparing means is adapted to compare the measured qualities of the milk from each of the teats of the milking animal with a respective reference quality value; and
- said indicating means is adapted to indicate, depending on said comparisons, whether or not milk drawn from each of the teats of the milking animal during a subsequent milking should be mixed with milk drawn from the respective other teats of the milking animal.

4. The milking system of claim 1 or 2 comprising a number of said teat cleaning and pre-milking device, said pre-milking sensing means; and said milk quality sensing means, which corresponds to the number of teats of the milking animal.

5. The milking system of any of claims 1-4 wherein any of said pre-milking sensing means and said milk quality sensing means is a device (60; 62) for non-contacting measurement.

6. The milking system of claim 5 wherein said device for non-contacting measurement is an optical device (60; 62).

7. The milking system of claim 6 comprising
- a light transparent chamber (70), through which said milk as obtained during the cleaning and pre-milking procedures is flowed, wherein
- said pre-milking sensing means is a device for determining the composition of a fluid in said light transparent chamber comprising a light source (68) for illuminating said light transparent chamber, and a light detector (72) for detecting light from said light source after having interacted with said fluid in said light transparent chamber.

8. The milking system of any of claims 1-7 wherein said milk quality sensing means is a somatic cell count device (62).

9. The milking system of any of claims 1-7 comprising
- a light transparent measuring chamber (80), through which said milk as obtained during the cleaning and pre-milking procedures is flowed, wherein
- said milk quality sensing means is a device for counting somatic cells or fat droplets comprising a light source system (78) for illuminating milk that flows through said measuring chamber; a two-dimensional camera system (82) including a lens system, preferably a microscope, for repeatedly recording two-dimensional digital images of illuminated milk that flows through said measuring chamber, where said two-dimensional digital images are recorded through said lens system; and a digital image processing system for determining a somatic cell or fat droplet count score from said two-dimensional images.

10. The milking system of any of claims 1-9 wherein any of said pre-milking sensing means and said milk quality sensing means is a device (84) for milk-contacting measurement having a sensor or probe (86) located inside said teat cleaning and pre-milking device.

11. The milking system of claim 10 wherein said teat cleaning and pre-milking device comprises means for cleaning said sensor subsequent to having been in contact with milk during said pre-milking.

12. The milking system of claim 10 or 11 wherein said device for milk-contacting measurement is any of a conductivity meter or an ion-sensitive sensor based device.

13. The milking system of claim 12 wherein said conductivity meter or said ion-sensitive sensor based device is capable of distinguishing pre-milk from water or from a cleaning fluid based on different conductivity or different ion concentration of said pre-milk and said water or cleaning fluid.

14. The milking system of any of claims 1-13 comprising
- means for receiving an indication of the identity of the milking animal, and optionally the identity of said teat of the milking animal; and
- means for adapting the cleaning and pre-milking procedures depending on the indicated identity of the milking animal, and optionally the identity of said teat of the milking animal.

15. The milking system of any of claims 1-16 wherein said milking system is automated and said device for milking the milking animal includes a milking robot.

16. A method for milking a teat of a milking animal comprising a method for cleaning and pre-milking the teat of the milking animal prior to the milking animal being milked, **characterized by** the steps of:
- cleaning and pre-milking said teat of the milking animal by a teat cleaning and pre-milking device (51) having cleaning means and pre-milking means;
- establishing that milk is actually extracted from said teat of the milking animal during pre-milking;
- measuring a quality, preferably a somatic cell count value, of said milk extracted from said teat of the milking animal during pre-milking;
- comparing the measured quality of said milk with a reference quality value;
- indicating, depending on said comparison, whether or not milk drawn from said teat of the milking animal during a subsequent milking should be mixed with milk drawn from another milking animal;
- attaching either one of a number of teat cups (11) corresponding to the number of teats of the milking animal or a at least one further teat cup (23) to said teat of the milking animal depending on said indication whether or not milk drawn from said teat of the milking animal during a subsequent milking should be mixed with milk drawn from another milking animal, wherein milk drawn from either one of said number of teat cups (11) is capable of being drawn to a common location and milk drawn from said one further teat cup (23) is capable of being drawn individually to a location different than said common location; and
- drawing milk from said teat of the milking animal and directing said milk to said common location or to said location different than said common location depending on whether said milk is drawn through one of said number of teat cups (11) or through said one further teat cup (23).

17. The method of claim 16 wherein the steps of cleaning and pre-milking; establishing; measuring; comparing; and indicating are performed for each of the teats of the milking animal in a sequential order, or concurrently for all of the teats of the milking animal.

18. The method of claim 16 or 17 wherein any of the steps of establishing and measuring is performed by a device (60; 62) for non-contacting measurement, preferably an optical device.

19. The method of any of claims 16-18 wherein
- said milk quality is a value of the somatic cell count; and
- said step of measuring is performed by a device (62) for counting somatic cells or fat droplets comprising a light source system (78) for illuminating milk that flows through said measuring chamber; a two-dimensional camera system (82) including a lens system, preferably a microscope, for repeatedly recording two-dimensional digital images of illuminated milk that flows through said measuring chamber, where said two-dimensional digital images are recorded through said lens system; and a digital image processing system for determining a somatic cell or fat droplet count score from said two-dimensional images.

20. The method of any of claims 16-19 wherein
- any of the steps of establishing and measuring is performed by a device (84) for milk-contacting measurement, preferably a conductivity meter or an ion-sensitive sensor based device, having a sensor or probe (86) located inside said teat cleaning and pre-milking device; and
- said method further comprises the step of cleaning said sensor subsequent to having been contact with milk during said pre-milking.

21. The method of any of claims 16-20 wherein said step of attaching is performed automatically by a robot arm.

## Patentansprüche

1. Melkanlage, die eine Vorrichtung zum Reinigen und Vormelken einer Zitze eines Milchtieres, bevor das Milchtier gemolken wird, und eine Einrichtung zum Melken des Milchtieres umfasst, wobei
die Vorrichtung zum Reinigen und Vormelken einer Zitze Folgendes einschließt:
eine Zitzenreinigungs- und Vormelkeinrichtung (51), die Reinigungsmittel und Vormelkmittel hat, wobei die Zitze des Milchtieres während der Reinigungs- und Vormelkvorgänge für die Reinigungsmittel und die Vormelkmittel freigelegt ist,
Vormelk-Sensormittel (60; 84), um festzustellen, dass während der Reinigungs- und Vormelkvorgänge tatsächlich Milch aus der Zitze des Milchtieres entzogen wird,
Milchquafität-Sensormittel (62; 84), um eine Qualität, vorzugsweise einen Körperzellen-Zählwert, der während der Reinigungs- und Vormelkvorgänge aus der Zitze des Milchtieres entzogenen Milch zu messen,
Vergleichsmittel (64), um die gemessene Qualität der Milch mit einem Bezugsqualitätswert zu vergleichen, und
Anzeigemittel (64), um in Abhängigkeit von dem Vergleich anzuzeigen, ob die während eines anschließenden Melkens aus der Zitze des Milchtieres entzogene Milch mit von einem anderen Milchtier entzogener Milch vermischt werden sollte oder nicht, und
die Einrichtung zum Melken des Milchtieres Folgendes umfasst:
eine Zahl von Zitzenbechern (11), die der Zahl von Zitzen des Milchtieres entspricht, wobei die Zitzenbecher an den Zitzen des Milchtieres befestigt werden können und durch dieselben Milch zu einem gemeinsamen Ort abgezogen werden kann,
wenigstens einen weiteren Zitzenbecher (23), der an einer Zitze des Milchtieres befestigt werden kann und durch den Milch anschließend einzeln zu einem anderen als dem gemeinsamen Ort abgezogen werden kann, und
Mittel zum Befestigen entweder eines der Zahl von Zitzenbechern, die der Zahl von Zitzen des Milchtieres entspricht, oder des weiteren Zitzenbechers an der Zitze des Milchtieres, in Abhängigkeit von der Anzeige der Anzeigemittel, und zum anschließenden Abziehen von Milch durch denselben.

2. Melkanlage nach Anspruch 1, wobei:
die Zitzenreinigungs- und Vormelkeinrichtung (51) mit einer Zitzenaufnahmeöffnung (55) und einem Zitzenaufnahmeöffnung-Abdichtungsmittel (56) versehen ist und das Vormelkmittel aus Vakuumzufuhrmitteln (69) besteht, um einen Unterdruck in der Zitzenreinigungs- und Vormelkeinrichtung zu erzeugen, wobei während der Reinigungs- und Vormelkvorgänge die Zitze des Milchtieres durch die Zitzenaufnahmeöffnung aufgenommen wird und sich das Abdichtungsmittel in einer im Wesentlichen luftdichten Abdichtungsberührung mit dem Euter des Milchtieres befindet.

3. Melkanlage nach Anspruch 1 oder 2, wobei:
die Zitzenreinigungs- und Vormelkeinrichtung dafür eingerichtet ist, jede der Zitzen des Milchtieres für die Reinigungs- und Vormelkvorgänge in einer Reihenfolge freizulegen,
das Vormelk-Sensormittel dafür eingerichtet ist, festzustellen, dass während der Reinigungs- und Vormelkvorgänge tatsächlich Milch aus jeder der Zitzen des Milchtieres entzogen wird,
das Milchquafität-Sensormittel dafür eingerichtet ist, die Qualität der während der Reinigungs- und Vormelkvorgänge aus jeder der Zitzen des Milchtieres entzogenen Milch zu messen,
das Vergleichsmittel dafür eingerichtet ist, die gemessenen Qualitäten der Milch aus jeder der Zitzen des Milchtieres mit einem jeweiligen Bezugsqualitätswert zu vergleichen, und
das Anzeigemittel dafür eingerichtet ist, in Abhängigkeit von den Vergleichen anzuzeigen, ob die während eines anschließenden Melkens aus jeder der Zitzen des Milchtieres entzogene Milch mit aus den jeweiligen anderen Zitzen des Milchtieres entzogener Milch vermischt werden sollte oder nicht.

4. Melkanlage nach Anspruch 1 oder 2, die eine Zahl der Zitzenreinigungs- und Vormelkeinrichtungen, der Vormelk-Sensormittel und der Milchqualität-Sensormittel umfasst, die der Zahl von Zitzen des Milchtieres entspricht.

5. Melkanlage nach einem der Ansprüche 1 bis 4, wobei jedes der Vormelk-Sensormittel und der Milchquafität-Sensormittel eine Einrichtung (60; 62) zum berührungslosen Messen ist.

6. Melkanlage nach Anspruch 5, wobei die Einrichtung zum berührungslosen Messen eine optische Einrichtung (60; 62) ist.

7. Melkanlage nach Anspruch 6, die Folgendes umfasst:
eine lichtdurchlässige Kammer (70), durch welche die Milch, wie sie während der Reinigungs- und Vormelkvorgänge gewonnen wird, fließen lassen wird, wobei
das Vormelk-Sensormittel eine Einrichtung, um die Zusammensetzung eines Fluids in der lichtdurchlässigen Kammer zu bestimmen, ist, die eine Lichtquelle (68) zum Beleuchten der lichtdurchlässigen Kammer und einen Lichtdetektor (72) zum Erfassen von Licht von der Lichtquelle, nachdem es mit dem Fluid in der lichtdurchlässigen Kammer in Wechselwirkung getreten ist, umfasst.

8. Melkanlage nach einem der Ansprüche 1 bis 7, wobei das Milchqualität-Sensormittel eine Körperzellen-Zähleinrichtung (62) ist.

9. Melkanlage nach einem der Ansprüche 1 bis 7, die Folgendes umfasst:
eine lichtdurchlässige Messkammer (80), durch welche die Milch, wie sie während der Reinigungs- und Vormelkvorgänge gewonnen wird, fließen lassen wird, wobei
das Milchqualität-Sensormittel eine Einrichtung zum Zählen von Körperzellen oder Fett-Tröpfchen ist, die ein Lichtquellensystem (78) zum Beleuchten der Milch, die durch die Messkammer fließt, ein zweidimensionales Kamerasystem (82), das ein Linsensystem, vorzugsweise ein Mikroskop, einschließt, um wiederholt zweidimensionale digitale Bilder der beleuchteten Milch, die durch die Messkammer fließt, aufzuzeichnen, wobei die zweidimensionalen digitalen Bilder durch das Linsensystem aufgezeichnet werden, und ein digitales Bildverarbeitungssystem umfasst, um aus den zweidimensionalen Bildern einen Körperzellen- oder Fett-Tröpfchen-Zählstand zu bestimmen.

10. Melkanlage nach einem der Ansprüche 1 bis 9, wobei jedes der Vormelk-Sensormittel und der Milchquafität-Sensormittel eine Einrichtung (84) zum die Milch berührenden Messen ist, die einen Sensor oder eine Sonde (86) hat, die innerhalb der Zitzenreinigungs- und Vormelkeinrichtung angeordnet ist.

11. Melkanlage nach Anspruch 10, wobei die Zitzenreinigungs- und Vormelkeinrichtung Mittel umfasst, um den Sensor anschließend daran, dass er während des Vormelkens in Berührung mit der Milch gewesen ist, zu reinigen.

12. Melkanlage nach Anspruch 10 oder 11, wobei die Einrichtung zum die Milch berührenden Messen entweder ein Leitfähigkeitsmessgerät oder ein Gerät auf der Grundlage eines für Ionen empfindlichen Sensors ist.

13. Melkanlage nach Anspruch 12, wobei das Leitfähigkeitsmessgerät oder das Gerät auf der Grundlage eines für Ionen empfindlichen Sensors dazu in der Lage ist, auf der Grundlage unterschiedlicher Leitfähigkeit oder unterschiedlicher Ionenkonzentration der Vormilch und des Wassers oder des Reinigungsfluids Vormilch von Wasser oder von einem Reinigungsfluid zu unterscheiden.

14. Melkanlage nach einem der Ansprüche 1 bis 13, die Folgendes umfasst:
Mittel, um eine Anzeige der Identität des Milchtieres und wahlweise der Identität der Zitze des Milchtieres zu empfangen, und
Mittel, um die Reinigungs- und Vormelkvorgänge in Abhängigkeit von der Identität des Milchtieres und wahlweise der Identität der Zitze des Milchtieres anzupassen.

15. Melkanlage nach einem der Ansprüche 1 bis 14, wobei die Melkanlage automatisiert ist und die Einrichtung zum Melken des Milchtieres einen Melkroboter einschließt.

16. Verfahren zum Melken einer Zitze eines Milchtieres, wobei das Verfahren ein Verfahren zum Reinigen und Vormelken der Zitze des Milchtieres, bevor das Milchtier gemolken wird, umfasst, **gekennzeichnet durch** die folgenden Schritte:
Reinigen und Vormelken der Zitze des Milchtieres **durch** eine Zitzenreinigungs- und Vormelkeinrichtung (51), die Reinigungsmittel und Vormelkmittel hat,
Feststellen, dass während des Vormelkens tatsächlich Milch aus der Zitze des Milchtieres entzogen wird,
Messen einer Qualität, vorzugsweise eines Körperzellen-Zählwerts, der während des Vormelkens aus der Zitze des Milchtieres entzogenen Milch,
Vergleichen der gemessenen Qualität der Milch mit einem Bezugsqualitätswert,
Anzeigen, in Abhängigkeit von dem Vergleich, ob die während eines anschließenden Melkens aus der Zitze des Milchtieres entzogene Milch mit von einem anderen Milchtier entzogener Milch vermischt werden sollte oder nicht,
Befestigen entweder eines der Zahl von Zitzenbechern (11), die der Zahl von Zitzen des Milchtieres entspricht, oder eines wenigstens einen weiteren Zitzenbechers (23) an der Zitze des Milchtieres, in Abhängigkeit von der Anzeige, ob die während eines anschließenden Melkens aus der Zitze des Milchtieres entzogene Milch mit von einem anderen Milchtier entzogener Milch vermischt werden sollte oder nicht, wobei die von jedem der Zahl von Zitzenbechern (11) abgezogene Milch zu einem gemeinsamen Ort abgezogen werden kann und die von dem einen weiteren Zitzenbecher (23) abgezogene Milch einzeln zu einem anderen als dem gemeinsamen Ort abgezogen werden kann, und
Abziehen von Milch aus der Zitze des Milchtieres und Leiten der Milch zu dem gemeinsamen Ort oder zu dem anderen als dem gemeinsamen Ort, in Abhängigkeit davon, ob die Milch **durch** einen der Zahl von Zitzenbechern (11) oder **durch** den einen weiteren Zitzenbecher (23) abgezogen wird.

17. Verfahren nach Anspruch 16, wobei die Schritte des Reinigens und Vormelkens, des Feststellens, des Messens, des Vergleichens und des Anzeigens für jede der Zitzen des Milchtieres in einer Reihenfolge oder gleichzeitig für alle der Zitzen des Milchtieres ausgeführt werden.

18. Verfahren nach Anspruch 16 oder 17, wobei jeder der Schritte des Feststellens und des Messens durch eine Einrichtung (60; 62) zum berührungslosen Messen, vorzugsweise eine optische Einrichtung, ausgeführt wird.

19. Verfahren nach einem der Ansprüche 16 bis 18, wobei
die Milchqualität ein Wert der Körperzellenzählung ist und
der Schritt des Messens durch eine Einrichtung (62) zum Zählen von Körperzellen oder Fett-Tröpfchen ausgeführt wird, die ein Lichtquellensystem (78) zum Beleuchten der Milch, die durch die Messkammer fließt, ein zweidimensionales Kamerasystem (82), das ein Linsensystem, vorzugsweise ein Mikroskop, einschließt, um wiederholt zweidimensionale digitale Bilder der beleuchteten Milch, die durch die Messkammer fließt, aufzuzeichnen, wobei die zweidimensionalen digitalen Bilder durch das Linsensystem aufgezeichnet werden, und ein digitales Bildverarbeitungssystem umfasst, um aus den zweidimensionalen Bildern einen Körperzellen- oder Fett-Tröpfchen-Zählstand zu bestimmen.

20. Verfahren nach einem der Ansprüche 16 bis 19, wobei
jeder der Schritte des Feststellens und des Messens durch eine Einrichtung (84) zum die Milch berührenden Messen, vorzugsweise ein Leitfähigkeitsmessgerät oder ein Gerät auf der Grundlage eines für Ionen empfindlichen Sensors, ausgeführt wird, die einen Sensor oder eine Sonde (86) hat, die innerhalb der Zitzenreinigungs- und Vormelkeinrichtung angeordnet ist, und
das Verfahren ferner den Schritt umfasst, den Sensor anschließend daran, dass er während des Vormelkens in Berührung mit der Milch gewesen ist, zu reinigen.

21. Verfahren nach einem der Ansprüche 16 bis 20, wobei der Schritt des Befestigens selbsttätig durch einen Roboterarm ausgeführt wird.

## Revendications

1. Système de traite, comprenant un appareil pour le nettoyage et la prétraite de la mamelle d'un animal en lactation avant la traite de l'animal en lactation, et un dispositif de traite de l'animal en lactation, dans lequel
ledit appareil de nettoyage et de prétraite d'une mamelle englobe :
un dispositif de nettoyage et de prétraite de la mamelle (51), comportant un moyen de nettoyage et un moyen de prétraite, dans lequel, au cours des procédures de nettoyage et de prétraite, ladite mamelle de l'animal en lactation est exposée audit moyen de nettoyage et audit moyen de prétraite ;
un moyen de détection de la prétraite (60 ; 84) pour déterminer que du lait est effectivement prélevé de ladite mamelle de l'animal en lactation au cours des procédures de nettoyage et de prétraite ;
un moyen de détection de la qualité du lait (62 ; 84) pour mesurer une qualité, de préférence une valeur de numération des cellules somatiques, dudit lait prélevé de ladite mamelle de l'animal en lactation au cours des procédures de nettoyage et de prétraite ;
un moyen de comparaison (64) pour comparer la qualité mesurée dudit lait avec une valeur de qualité de référence ; et
un moyen d'indication (64) pour indiquer, sur la base de ladite comparaison, si le lait prélevé de ladite mamelle de l'animal en lactation au cours d'une traite ultérieure doit ou non être mélangé avec le lait prélevé d'un autre animal en lactation ; et
ledit dispositif de traite de l'animal en lactation comprend
plusieurs gobelets trayeurs (11), dont le nombre correspond au nombre de mamelles de l'animal en lactation, les gobelets trayeurs pouvant être fixés sur les mamelles de l'animal en lactation et permettant de transférer le lait vers un emplacement commun ;
au moins un gobelet trayeur additionnel (23) pouvant être fixé sur une mamelle de l'animal en lactation et permettant de transférer ensuite le lait individuellement vers un emplacement différent dudit emplacement commun ; et
un moyen pour fixer sur ladite mamelle de l'animal en lactation l'un des plusieurs gobelets trayeurs, dont le nombre correspond au nombre de mamelles de l'animal en lactation, ou ledit gobelet trayeur additionnel, en fonction de l'indication dudit moyen d'indication ; et pour prélever ensuite le lait à travers ceux-ci.

2. Système de traite selon la revendication 1, dans lequel
ledit dispositif de nettoyage et de prétraite de la mamelle (51) comporte une ouverture de réception de la mamelle (55) et un moyen d'établissement de l'étanchéité de l'ouverture de réception de la mamelle (56), ledit moyen de prétraite étant constitué par un moyen d'établissement d'un vide (69), pour établir une dépression dans ledit dispositif de nettoyage et de prétraite de la mamelle, dans lequel, au cours desdites procédures de nettoyage et de prétraite, ladite mamelle de l'animal en lactation est reçue par l'ouverture de réception de la mamelle, un contact étanche, pratiquement hermétique, étant établi entre ledit moyen d'établissement de l'étanchéité et le pis de l'animal en lactation.

3. Système de traite selon les revendications 1 ou 2, dans lequel
ledit dispositif de nettoyage et de prétraite de la mamelle est adapté pour exposer chacune des mamelles de l'animal en lactation en vue desdites procédures de nettoyage et de prétraite, dans un ordre séquentiel ;
ledit moyen de détection de la prétraite est adapté pour déterminer que du lait est effectivement prélevé de chacune des mamelles de l'animal en lactation au cours desdites procédures de nettoyage et de prétraite ;
ledit moyen de détection de la qualité du lait est adapté pour mesurer la qualité du lait prélevé de chacune des mamelles de l'animal en lactation au cours desdites procédures de nettoyage et de prétraite ;
ledit moyen de comparaison est adapté pour comparer les qualités mesurées du lait prélevé de chacune des mamelles de l'animal en lactation avec une valeur de qualité de référence respective ; et
ledit moyen d'indication est adapté pour indiquer, sur la base desdites comparaisons, si le lait prélevé de chacune des mamelles de l'animal en lactation au cours d'une traite ultérieure doit ou non être mélangé avec le lait prélevé des autres mamelles respectives de l'animal en lactation.

4. Système de traite selon les revendications 1 ou 2, comprenant plusieurs dits dispositifs de nettoyage et de prétraite de la mamelle ; plusieurs dits moyens de détection de la prétraite ; et plusieurs dits moyens de détection de la qualité du lait, dont le nombre correspond au nombre de mamelles de l'animal en lactation.

5. Système de traite selon l'une quelconque des revendications 1 à 4, dans lequel un quelconque desdits moyens de détection de la prétraite et desdits moyens de détection de la qualité du lait est constitué par un dispositif (60 ; 62) destiné à effectuer une mesure sans contact.

6. Système de traite selon la revendication 5, dans lequel ledit dispositif destiné à effectuer une mesure sans contact est un dispositif optique (60 ; 62).

7. Système de traite selon la revendication 6, comprenant :
une chambre transparente à la lumière (70), à travers laquelle s'écoule ledit lait prélevé au cours des procédures de nettoyage et de prétraite ; dans lequel
ledit moyen de détection de la prétraite est un dispositif destiné à déterminer la composition d'un fluide dans ladite chambre transparente à la lumière, comprenant une source de lumière (68) pour éclairer ladite chambre transparente à la lumière, et un détecteur de lumière (72) pour détecter la lumière émise par ladite source de lumière après son interaction avec ledit fluide dans ladite chambre transparente à la lumière.

8. Système de traite selon l'une quelconque des revendications 1 à 7, dans lequel ledit moyen de détection de la qualité du lait est un dispositif de numération des cellules somatiques (62).

9. Système de traite selon l'une quelconque des revendications 1 à 7, comprenant :
une chambre de mesure transparente à la lumière (80), à travers laquelle s'écoule ledit lait prélevé au cours des opérations de nettoyage et de prétraite ; dans lequel
ledit moyen de détection de la qualité du lait est un dispositif destiné à effectuer la numération des cellules somatiques ou des gouttelettes de matière grasse, comprenant un système de source de lumière (78) pour éclairer le lait s'écoulant à travers ladite chambre de mesure ; un système de caméra bidimensionnelle (82), englobant un système d'objectif, de préférence un microscope, pour enregistrer de manière répétée des images numériques bidimensionnelles du lait éclairé s'écoulant à travers ladite chambre de mesure, lesdites images numériques bidimensionnelles étant enregistrées par l'intermédiaire dudit système d'objectif; et un système de traitement des images numériques pour déterminer un résultat de la numération des cellules somatiques ou des gouttelettes de matière grasse sur la base desdites images bidimensionnelles.

10. Système de traite selon l'une quelconque des revendications 1 à 9, dans lequel un quelconque desdits moyens de détection de la prétraite et desdits moyens de détection de la qualité du lait est un dispositif (84) destiné à effectuer une mesure par contact avec le lait, comportant un capteur ou une sonde (86) positionné à l'intérieur du dispositif de nettoyage et de prétraite de la mamelle.

11. Système de traite selon la revendication 10, dans lequel ledit dispositif de nettoyage et de prétraite de la mamelle comprend un moyen pour nettoyer ledit capteur après sa mise en contact avec le lait au cours de ladite prétraite.

12. Système de traite selon les revendications 10 ou 11, dans lequel ledit dispositif destiné à effectuer une mesure par contact avec le lait est un quelconque dispositif basé sur un moyen de mesure de la conductivité ou un capteur sensible aux ions.

13. Système de traite selon la revendication 12, dans lequel ledit dispositif à base d'un moyen de mesure de la conductivité ou d'un capteur sensible aux ions est capable de distinguer un lait de prétraite de l'eau ou d'un fluide de nettoyage sur la base d'une conductivité différente ou d'une concentration en ions différente dudit lait de prétraite et de ladite eau ou dudit fluide de nettoyage.

14. Système de traite selon l'une quelconque des revendications 1 à 13, comprenant
un moyen pour recevoir une indication concernant l'identité de l'animal en lactation, et optionnellement l'identité de ladite mamelle dudit animal en lactation ; et
un moyen pour adapter les procédures de nettoyage et de prétraite sur la base de l'identité indiquée de l'animal en lactation, et optionnellement de l'identité de ladite mamelle de l'animal en lactation.

15. Système de traite selon l'une quelconque des revendications 1 à 14, dans lequel ledit système de traite est automatisé, ledit dispositif de traite de l'animal en lactation englobant un robot de traite.

16. Procédé de traite d'une mamelle d'un animal en lactation, comprenant un procédé de nettoyage et de prétraite de la mamelle de l'animal en lactation avant la traite de l'animal en lactation, **caractérisé par** les étapes ci-dessous :
nettoyage et prétraite de ladite mamelle de l'animal en lactation par un dispositif de nettoyage et de prétraite de la mamelle (15), comportant un moyen de nettoyage et un moyen de prétraite ;
détermination du fait que du lait est effectivement prélevé de ladite mamelle de l'animal en lactation au cours de la prétraite ;
mesure d'une qualité, de préférence d'une valeur de numération des cellules somatiques, dudit lait prélevé de ladite mamelle de l'animal en lactation au cours de la prétraite ;
comparaison de la qualité mesurée dudit lait avec une valeur de qualité de référence ;
indication, sur la base de ladite comparaison, si le lait prélevé de ladite mamelle de l'animal en lactation au cours d'une traite ultérieure doit ou non être mélangé avec le lait prélevé d'un autre animal en lactation ;
fixation de l'un de plusieurs gobelets trayeurs (11), dont le nombre correspond au nombre des mamelles de l'animal en lactation, ou d'au moins un gobelet trayeur additionnel (23) sur ladite mamelle de l'animal en lactation, sur la base de ladite indication indiquant si le lait prélevé de ladite mamelle de l'animal en lactation au cours d'une traite ultérieure doit ou non être mélangé avec le lait prélevé d'un autre animal en lactation, le lait prélevé par l'un desdits plusieurs gobelets trayeurs (11) pouvant être transféré vers un emplacement commun, et le lait prélevé dudit gobelet trayeur additionnel (23) pouvant être transféré individuellement vers un emplacement différent dudit emplacement commun ; et
prélèvement de lait de ladite mamelle de l'animal en lactation et guidage dudit lait vers ledit emplacement commun ou vers ledit emplacement différent dudit emplacement commun, selon que ledit lait est prélevé à travers un desdits plusieurs gobelets trayeurs (11) ou à travers ledit gobelet trayeur additionnel (23).

17. Procédé selon la revendication 16, dans lequel les étapes de nettoyage et de prétraite ; de détermination ; de mesure ; de comparaison ; et d'indication sont effectuées pour chacune des mamelles de l'animal en lactation, dans un ordre séquentiel, ou de manière simultanée pour toutes les mamelles de l'animal en lactation.

18. Procédé selon les revendications 16 ou 17, dans lequel une quelconque des étapes de détermination et de mesure est effectuée par un dispositif (60 ; 62) destiné à effectuer une mesure sans contact, de préférence un dispositif optique.

19. Procédé selon l'une quelconque des revendications 16 à 18, dans lequel
ladite qualité du lait correspond à une valeur de la numération des cellules somatiques ; et
ladite étape de mesure est effectuée par un dispositif (62) destiné à effectuer la numération des cellules somatiques ou des gouttelettes de matière grasse, comprenant un système de source de lumière (78) pour éclairer le lait s'écoulant à travers ladite chambre de mesure ; et un système de caméra bidimensionnelle (82), englobant un système d'objectif, de préférence un microscope, pour enregistrer de manière répétée des images numériques bidimensionnelles du lait éclairé s'écoulant à travers ladite chambre de mesure, lesdites images numériques bidimensionnelles étant enregistrées par l'intermédiaire dudit système d'objectif; et un système de traitement des images numériques pour déterminer un résultat de la numération des cellules somatiques ou des gouttelettes de matière grasse sur la base desdites images bidimensionnelles.

20. Procédé selon l'une quelconque des revendications 16 à 19, dans lequel
une quelconque des étapes de détermination et de mesure est effectuée par un dispositif (84) destiné à effectuer une mesure par contact avec le lait, de préférence un dispositif basé sur un moyen de mesure de la conductivité ou un capteur sensible aux ions, comportant un capteur ou une sonde (86) positionné à l'intérieur dudit dispositif de nettoyage et de prétraite de la mamelle ; et
ledit procédé comprend en outre l'étape de nettoyage dudit capteur après sa mise en contact avec le lait au cours de ladite prétraite.

21. Procédé selon l'une quelconque des revendications 16 à 20, dans lequel ladite étape de fixation est effectuée de manière automatique par un bras robotique.
